# EUROPÄISCHE PATENTSCHRIFT

(11) **EP 2 081 010 B1**
(45) Veröffentlichungstag und Bekanntmachung des Hinweises auf die Patenterteilung: **12.03.2014**
(21) Anmeldenummer: 08100559.7
(22) Anmeldetag: 16.01.2008
(51) Int. Cl.: G01N 21/15, G01N 21/53

(54) **Modulare Staubmessung**
Modular dust measurement
Mesure de poussière modulaire

(43) Veröffentlichungstag der Anmeldung: 22.07.2009
(73) Patentinhaber: SICK Engineering GmbH, 01458 Ottendorf-Okrilla (DE)
(72) Erfinder: Melcher, Uwe, 01458, Ottendorf-Okrilla (DE)
(74) Vertreter: Hehl, Ulrich

(56) Entgegenhaltungen:
- EP-A- 0 208 646
- EP-A- 1 729 107
- DE-C1- 19 946 110

## Beschreibung

Die Erfindung betrifft eine modulare Staubmessvorrichtung nach dem Oberbegriff von Anspruch 1 und ein Staubmessverfahren nach dem Oberbegriff von Anspruch 9.

Optische Vorrichtungen zur Staubmessung werden eingesetzt, um die Konzentration von Partikeln (Aerosolen, Staubteilchen, usw.) in Abluftkanälen bzw. in der Atmosphäre festzustellen. Dadurch ist es möglich, zum Beispiel den Rußpartikelausstoß in einem Kamin zu ermitteln. Weiterhin werden optische Vorrichtungen zur Staubmessung im Straßenverkehr, in der Schifffahrt oder der Luftfahrt eingesetzt, um gegebenenfalls ein Warnsignal beim Unterschreiten einer definierten Sichtweite auszugeben.

Die optischen Vorrichtungen zur Staubmessung arbeiten dabei entweder nach dem Transmissionsprinzip oder nach dem Streulichtprinzip.

Bei der Staubmessung nach dem Transmissionsprinzip sendet ein Lichtsender ein definiertes Lichtbündel in einen Messbereich aus. Am gegenüberliegenden Ende des Messbereiches ist ein Reflektor angeordnet, der das Lichtbündel erneut durch den Messbereich zu seinem Ausgangsort zurückwirft. In unmittelbarer Nähe des Lichtsenders ist eine Lichtempfangseinheit angeordnet, mit der die ankommende Lichtmenge erfasst wird. Alternativ befindet sich am gegenüberliegenden Ende des Messbereichs anstelle des Reflektors der Lichtempfänger, so dass Messlicht die Messstrecke nur einmal durchläuft. Befinden sich keine Partikel in dem Messbereich, wird die von der Lichtempfangseinheit erfasste Lichtmenge einem Transmissionswert von 100 % zugeordnet. Aus dem mathematischen Zusammenhang zwischen der Länge des Lichtweges und dem in der Lichtempfangseinheit gemessenen Transmissionswert kann somit die Staubmenge pro Wegstrecke ermittelt werden.

Die optischen Vorrichtungen zur Staubmessung, die nach dem Prinzip der Streulichtmessung arbeiten, werten anders als die Transmission gerade nicht die von der Staubmenge durchgelassenen, sondern die abgelenkten oder gestreuten Lichtanteile des Lichtsenders aus. Dabei wird eine Vorwärts- und Rückwärtsstreuung unterschieden. Bei der Rückwärtsstreuung (Backscatter) wird ein Lichtsender und eine Lichtempfangseinheit in einem gemeinsamen Gehäuse untergebracht. Durch mindestens ein Lichtaustritts- und Lichteintrittsfenster gelangt das ausgesandte Lichtbündel in den Staubbereich, beziehungsweise kann Licht, das aus dem Staubbereich kommt, zur Lichtempfangseinheit gelangen. Der Lichtsender und die Lichtempfangseinheit sind in dem gemeinsamen Gehäuse so angebracht, dass sich das vom Lichtsender ausgesandte Lichtbündel und das von der Lichtempfangseinheit aufgenommene Lichtbündel innerhalb des Staubbereiches überschneiden. Dadurch wird bei der Streulichtmessung nur dann Licht zur Lichtempfangseinheit gelangen, wenn zumindest Teile des ausgesandten Lichtbündels an einem Partikel innerhalb des Messbereiches zurück gestreut werden. Bei diesem Prinzip der rückwärtsgestreuten Messung gelangt somit eine der Partikelhäufigkeit proportionale Lichtmenge zur Lichtempfangseinheit, so dass damit die Messung der Staubkonzentration möglich ist.

Die Vorwärtsstreuung unterscheidet sich im Wesentlichen durch die Anordnung des Lichtempfängers, der um einen Vorwärtsstreuwinkel zur Abstrahlrichtung des Lichts versetzt im Messbereich gegenüberliegend angeordnet wird. Dabei kann der Empfänger in einem eigenen Gehäuse oder alternativ in einem lanzenförmigen Messkörper sitzen, der in den Messbereich hineinragt. Bei der Vorwärtsstreuung wird dann wie bei der Rückwärtsstreuung der gestreute Lichtanteil ausgewertet, mit dem Unterschied, dass die Streuwinkel hier gestreckt und nicht wie bei Rückwärtsstreuung spitz sind.

Es sind noch weitere nicht optische Messprinzipien bekannt, etwa triboelektrische oder gravimetrische Messung. Jedes dieser beschriebenen Messprinzipien bzw. der nach diesem Messprinzip arbeitende Staubmesser ist für bestimmte Anwendungen geeignet, die sich nach Intensität der Staubbelastung, Wasserdampfanteil, Dimensionen der Messbereiche wie etwa eines Kamins und weiteren derartigen anwendungsabhängigen Anforderungen unterscheiden. Wenn sich beispielsweise diese Messbedingungen ändern und aus diesem oder einem anderen Grund das Messprinzip erweitert oder umgerüstet werden soll, so ist herkömmlich ein Austausch des kompletten Messsystems erforderlich. Dies ist mit hohem Kosten- und Zeitaufwand verbunden und erzwingt Stillzeiten.

Ein besonderes Problem optischer Vorrichtungen zur Staubmessung besteht darin, dass diese Vorrichtung mit der staubbelasteten, Umgebung meist in direktem Kontakt steht. Auf den optischen Grenzflächen, mit denen die Vorrichtung gegenüber der staubbelasteten Umgebung abgegrenzt ist, kann es demzufolge im praktischen Einsatz zu Ablagerungen von Staub kommen. Daher ist im Stand der Technik beispielsweise aus der DE 1 993 225 bekannt, die optischen Grenzflächen durch einen Überdruck vor Staubablagerungen zu schützen oder sie wie beispielsweise in der DE 29 31 266 C2 mit Hilfe von Spülluft zu reinigen. Je nach Messprinzip besteht aber ein völlig unterschiedlicher Bedarf an Spülluft, so dass jeder Staubmesser einer für ihn dimensionierten Spülluftversorgung bedarf. Beim Austausch eines Staubmessers muss daher auch die Spülluftversorgung mit ausgetauscht werden, wodurch sich der Aufwand erheblich vergrößert.

In der EP 0 208 646 ist ein stationäres Tyndallometer offenbart, welches für eine Feinstaubmessung mittels einer Streulichtmesskammer ausgebildet ist. Über Ringspaltdüsen wird ein Reinluftstrom gezielt an der Innenwand entlanggeführt, um hier Ablagerungen von Staub zu vermeiden. Es ist eine Ausführungsform als Vielstellenmessanlage genannt, bei der mehrere Staubmessgeräten über ein Interface an eine EDV-Anlage angeschlossen werden.

Es sind Staubmesser bekannt, bei denen der optische Messkopf in einem Gehäuse untergebracht und mit einer in einem zweiten Gehäuse befindlichen Anschlusseinheit verbunden ist, welche eine integrierte Spülluftversorgung besitzt. Diese Anschlusseinheit ist aber für den ihr zugeordneten Messkopf ausgebildet, d.h. nach Schnittstellen, Auswertung und Spülluftbedarf so aufgebaut, dass gerade der spezielle Messkopf mit seinem Messprinzip unterstützt wird. Bei einer Umrüstung auf ein anderes Messprinzip muss daher neben dem Sensorkopf auch die Anschtusseinheit ausgetauscht werden.

Vor diesem Hintergrund ist Aufgabe der Erfindung, ein Staubmesssystem anzugeben, welches eine einfache Anpassung an veränderte Messanforderungen ermöglicht.

Diese Aufgabe wird durch eine modulare Staubmessvorrichtung nach Anspruch 1 und ein Staubmessverfahren nach Anspruch 9 gelöst. Dabei geht die Lösung von dem Prinzip aus, die Messköpfe modular mit einheitlichem Aufbau und einheitlichen Schnittstellen zu versehen und ein Zentralmodul zu schaffen, welches die Kommunikation, Auswertung und Versorgung einer großen Familie von Sensormodulen ermöglicht.

Die erfindungsgemäße Lösung hat den Vorteil, dass ein vereinheitlichtes modulares Staubmesssystem geschaffen wird, welches einfach und kostengünstig auf- und nachrüstbar ist und dadurch zukunftssicherer wird. Eine Ergänzung oder Aufrüstung ist teilweise sogar im laufenden Betrieb möglich, die Montage besonders in Kraftwerken erheblich vereinfacht. Damit kann der im Stand der Technik erforderliche aufwändige Kompletttausch aller Komponenten unter vorübergehender Stilllegung vermieden werden. Eine vereinheitlichte Funktionalität und Bedienbarkeit macht das System weniger wartungsanfällig und benutzerfreundlicher. Schließlich wird auch jedes einzelne System für sich durch den vereinheitlichten Aufbau kostengünstiger in der Herstellung und es müssen weniger Bauteile hergestellt und gelagert werden.

Vorteilhafterweise sind das Zentralmodul und das Sensormodul jeweils in einem separaten Gehäuse untergebracht. Beide Module sind dann geschützt und können am passenden Ort installiert werden, etwa indem das Zentralmodul für Bedienpersonal gegenüber dem eigentlichen Messort besser zugänglich montiert wird.

Das Zentralmodul weist bevorzugt einige oder alle folgenden Anschlüsse auf: 0-20mA Stromaus- und -eingänge, Relais, Digitaleingänge, ProfiBUS, Ethernet, CAN, seriell, UMTS, GSM. Es lässt sich somit in bestehende Steuerungsanlagen einbinden, kann Messdaten übertragen, drahtlos abgefragt werden und weiteren anzuschließenden Geräten Zugang zu Stromversorgung und Datennetzen anbieten.

Weiterhin weist das Zentralmodul bevorzugt eine Speichereinrichtung auf, um die Eingangsdaten aller angeschlossenen Sensormodule aufzuzeichnen und zur Auswertung über einen Anschluss auszugeben, wobei die Speichereinrichtung insbesondere entnehmbar und in einen externen Computer einsetzbar oder dort anschließbar ist. Durch diese zentralisierte Loggingfunktion können sämtliche relevanten Daten aufgezeichnet werden. Die Speichereinrichtung kann für Auswertungen auf einem Notebook oder einem anderen Rechner entnommen werden, so dass man gerade für aufwändigere Auswertungen oder zu Prüfzwecken von Abgaswerten nicht an den Messort gebunden ist.

Die Sensormodule unterschiedlicher Messprinzipien umfassen bevorzugt einige oder alle der Folgenden: Transmissionsmesser, Rückwärtsstreumesser mit und ohne Lichtfalle, einteilige Vorwärtsstreulichtmesser mit lanzenförmigem Messkörper oder zweiteilige Vorwärtsstreulichtmesser. Die erfindungsgemäße modulare Staubmessung kann alle optischen Messköpfe nach beliebigen Messprinzipien unterstützen.

In einer bevorzugten Weiterbildung sind auch die Sensormodule in sich modular, um die Hinzufügung weiterer Messfunktionen oder Optionen zu ermöglichen. Der modulare Aufbau erstreckt sich also auch auf den Aufbau der Einzelmodule selbst. Dadurch können zum einen die Herstellkosten für die Module gering gehalten werden. Zudem ist dadurch wesentlich vereinfacht, die Sensormodule nicht durch Austausch, sondern durch Nachrüstung an neue Aufgaben anzupassen. Auch das Zentralmodul kann in sich modular aufgebaut sein, etwa um zusätzliche Anschlussplätze für weitere oder neuartige Sensormodule oder um weitere Funktionalität beispielsweise zu Auswertung, Datensicherung oder Bedienung zu schaffen.

Die Sensormodule untereinander und gegenüber dem Zentralmodul weisen bevorzugt gleiche Hardware- und Softwarestrukturen auf, insbesondere gleiche Prozessoren, Stromversorgungen, Schnittstellen, Resetschaltungen, Speicherfunktionen, Statusanzeigen und/oder Firmware. Damit wird die Entwicklung, Herstellung und Wartung erheblich vereinfacht und kostengünstiger.

Vorteilhafterweise ist eine einheitliche Bediensoftware vorgesehen, welche auf einem gemeinsamen Display die Parametrierung der Sensormodule, der Spülluft und/oder die Anzeige von Messdaten ermöglicht. Der Benutzer muss sich damit nur einmal in die Bediensoftware einarbeiten und kann dann zentral alle Einstellungen und Auswertungen vornehmen, ohne sich auf ein neues Bedienkonzept umstellen zu müssen, wenn etwa das Sensormodul ausgetauscht wird oder sonstige Änderungen vorgenommen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung des erfindungsgemäßen Staubmesssystems mit einem Sensormodul und dem Zentralmodul; und
- Fig. 2: eine weitere schematische Darstellung des Zentralmoduls mit einer Vielzahl möglicher anschließbarer Sensormodule.

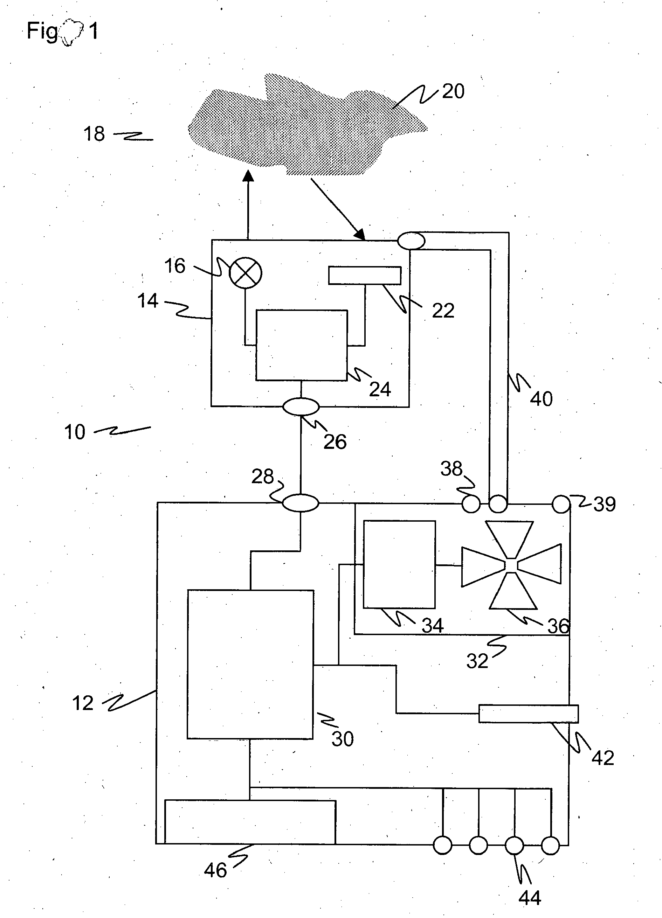

Figur 1 zeigt eine schematische Darstellung einer Ausführungsform der erfindungsgemäßen modularen Staubvorrichtung 10 mit einem Zentralmodul 12 und einem Sensormodul 14. Das Sensormodul 14 arbeitet hier beispielhaft nach dem Rückstreuprinzip, indem Licht eines Lichtsenders 16, etwa eines Lasers oder einer LED, in einen Messbereich 18 gesandt und dort an als schematische Wolke 20 dargestellten Partikeln zum Teil zurückgestreut wird. Das rückgestreute Licht wird von einem Lichtempfänger 22 in ein elektrisches Signal umgewandelt. Eine Sensorsteuerung 24 ist mit Lichtsender 16 und Lichtempfänger 22 verbunden, um das Sendelicht zu steuern und das Empfangssignal zu erhalten.

Die Sensorsteuerung 24 gibt das Empfangssignal über eine Sensorschnittstelle 26 aus. Dabei können entweder Rohdaten oder bereits vorverarbeitete Messergebnisse ausgegeben werden. Die Daten werden dafür in ein standardisiertes Format gebracht. Die Sensorschnittstelle 26 ist mit einer entsprechenden Zentralmodulschnittstelle 28 verbunden. Die Schnittstellen 26, 28 nutzen einen festgelegten, an sich aber beliebigen drahtgebundenen oder drahtlosen Standard oder ein Bussystem.

Das Zentralmodul 12 weist eine Auswertungseinheit 30 und eine Spüllufteinheit 32 auf. Die Auswertungseinheit 30 ist mit der Zentralmodulschnittstelle 28 verbunden und erhält so die Messdaten des Sensormoduls 14. In der Auswertungseinheit 30 können eine Vielzahl von Auswertungsverfahren implementiert sein, um Messdaten verschiedener Sensormodule 14 zu verarbeiten.

Die Spüllufteinheit 32 umfasst eine mit der Auswertungseinheit 30 verbundene Spülluftsteuerung 34 für das Spülluftmanagement der angeschlossenen Sensormodule 14, wobei das Spülluftmanagement alternativ auch in die Auswertungseinheit 30 integriert sein kann. Die Spüllufteinheit umfasst weiterhin ein Gebläse 36 zur Erzeugung eines Luftstroms, der an Spülluftanschlüssen 38 verfügbar gemacht wird. Das Gebläse 36 saugt Luft über einen Luftansaugstutzen 39 im Gehäuse des Zentralmoduls 12 an.

Über einen Schlauch 40 ist das Sensormodul 14 an die Spülluft angeschlossen. Über unterschiedliche Durchmesser der Anschlussstücke, auch durch Ventile oder Blenden, an den Anschlüssen 38 und eine Einstellung der Leistungsaufnahme des Gebläses 36 durch die Spülluftsteuerung 34 und damit die Drehzahl kann der Wirkdruck und die Spülluftmenge an jedem Anschluss 38 angepasst werden. Alternativ ist denkbar, dass Gebläse 36 bei fester Drehzahl zu betreiben und die Anpassung der Spülluft allein durch die Durchmesser der Anschlussstücke vorzunehmen. Nicht verwendete Anschlüsse 38 können mit einer Kappe verschlossen werden, um den Druck zu erhalten.

An die Auswertungseinheit 30 ist eine Speichereinrichtung 42 angeschlossen. Dies kann eine Karte, aber auch ein anderes Speichermedium mit Flash-Speicher wie eine SD-Karte oder ein USB-Stick sein. In der Speichereinrichtung 42 legt die Auswertungseinheit 30 Messergebnisse und Statusinformationen der angeschlossenen Sensoren 14 sowie Bedienparameter ab, wobei die Speichereinrichtung 42 entweder in der Lage ist, diese Daten über eine Schnittstelle 44 des Zentralmoduls 12 auszugeben, oder die Speichereinrichtung 42 ist als Ganzes entnehmbar und kann zur weiteren Auswertung in einen Computer eingesetzt werden.

Über eine Vielzahl mit der Auswertungseinheit 30 verbundener Schnittstellen und Anschlüsse 44 stehen dem Benutzer unabhängig von der Art des angeschlossenen Sensormoduls 14 zahlreiche Ein-/Ausgabefunktionen zur Verfügung. Diese Anschlüsse können Versorgungsanschlüsse oder Datenschnittstellen sein, etwa 0-20mA Stromein- und -ausgänge, Relais, Digitalein- und -ausgänge, ProfiBUS, CAN, Ethernet, Modemanschluss zur Datenfernübertragung und auch drahtlose Datenschnittstellen wie UMTS, GSM oder Bluetooth.

An dem Zentralmodul 12 ist ein Anzeige- und Bedienelement 46 vorgesehen, beispielsweise ein berührungsempfindliches LCD-Feld, aber auch LEDs, Tasten oder Kombinationen hiervon. Über dieses Anzeige- und Bedienelement 46 kann der Benutzer mit einem einheitlichen Mensch-Maschine-Interface unabhängig vom angeschlossenen Sensormodul 14 Messdaten ansehen oder Parametrierungen vornehmen, wie etwa Nachstellungen der benötigten Spülluftmenge, aber auch Visualisierung von Wartungsanforderungen oder der aktuellen Messgüte. Die Sensormodule 14 können benötigte Parameter selbst gespeichert halten und an das Zentralmodul 12 melden, alternativ auch lediglich eine Typ- oder Identifikationsnummer an die Auswertungseinheit 30 übergeben, so dass dort der benötigte Parametersatz ausgewählt werden kann.

Verschiedene Sensormodule 14 sind jeweils in einem Gehäuse mit einheitlicher Form und Farbgebung und einheitlicher Herstellungstechnologie versehen. Auch das Zentralmodul 12 besitzt ein eigenes Gehäuse, das einheitlich zu denjenigen der Sensormodule 14 sein kann. Die Sensormodule 14 besitzen Standardflansche zum Anbau am Gaskanal.

Unabhängig vom Messprinzip werden in den Sensormodulen 14 und im Zentralmodul 12 gleiche Prozessortypen, Steuerfunktionen, Stromversorgung, Firmware und somit einheitliche Hardware- und Softwarestrukturen eingesetzt. Damit sind Sensormodule 14 unabhängig vom Messprinzip immer vollständig kompatibel zu ein und demselben universellen Zentralmodul 12. Das modulare Prinzip setzt sich auch im Aufbau der Sensormodule 14 selbst fort, so dass sie leicht erweitert oder umgerüstet werden können.

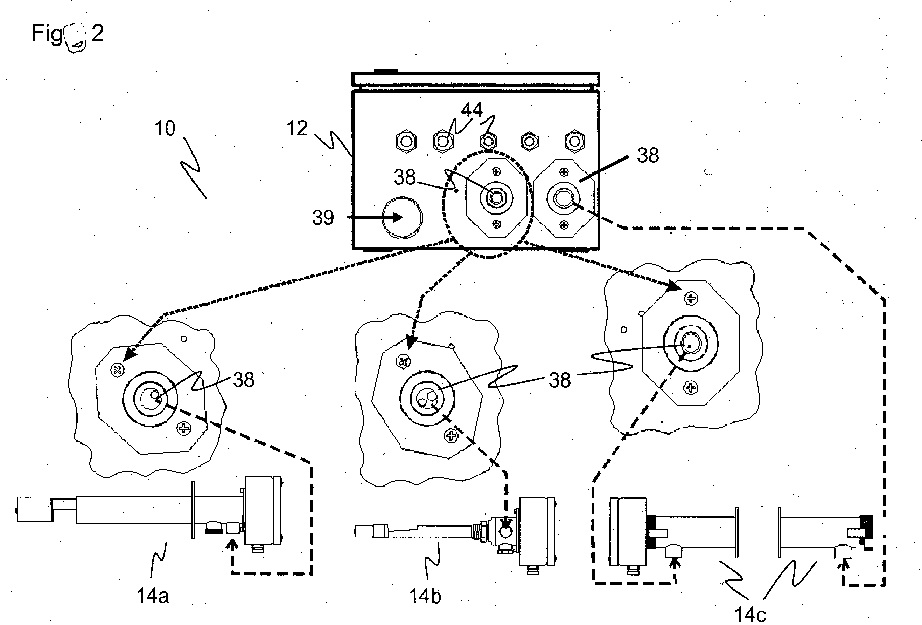

Figur 2 zeigt das Zentralmodul 12 und beispielhaft drei anschließbare Sensormodule 14a-14c. Dabei bezeichnen gleiche Bezugszeichen die gleichen Merkmale wie in der Figur 1. Der Anschluss 38 an die Spülluft erfolgt nach den Anforderungen des Messprinzips des Sensormoduls 14a-14c. So ist für die Messung mit Vorwärtsstreuung mit lanzenförmigem Messkörper mit den Sensormodulen 14a und 14b sehr wenig bzw. wenig Spülluft erforderlich. Bei Messung der Transmission mit einem zweiteiligen Sensormodul 14c muss sowohl die Reflektoreinheit wie die Einheit mit Lichtsender und Lichtempfänger mit Spülluft versorgt werden, so dass zwei Anschlüsse 38 benötigt werden und entsprechend viel Spülluftbedarf besteht.

Die drei hier dargestellten Sensormodule 14a-14c sind nur Beispiele für anschließbare Sensormodule 14 mit einem der optischen Prinzipien, wie sie einleitend beschrieben worden sind. Dabei können ein oder mehrere Sensormodule 14 an ein Zentralmodul 12 angeschlossen werden. Zusätzlich zu den optischen Sensormodulen 14 sind auch weitere staubmessende Module 14 denkbar, die beispielsweise triboelektrisch oder gravimetrisch arbeiten. Auch andere Sensormodule 14, etwa Brandmelder oder Durchlaufmesser, können an das Zentralmodul 12 angeschlossen werden, um die einheitliche modulare Architektur, die Schnittstellen und das Bedienkonzept auszunutzen.

Die Erfindung vereinheitlicht somit die Vielzahl von Einzelgeräten zur Staubmessung mit optischen Messprinzipien und integriert eine komplette Produktfamilie mit vereinheitlichten Konstruktionsmerkmalen, modularem Aufbau, einheitlichem Design, universeller Anschluss- und Auswertungselektronik, einheitlichem Bedienprogramm sowie universellem Zubehör. Damit kann sich der Nutzer kostengünstiger und flexibler an neue Anforderungen seiner Anwendungen einstellen.

## Patentansprüche

1. Modulare Staubmessvorrichtung (10) zur Bestimmung einer Fremdkörperkonzentration in einem Gas mit mindestens einem optischen Sensorkopf (14), welcher einen Lichtsender (16) und einen Lichtempfänger (22) aufweist, und mit einer Zentraleinheit (12), welche eine Auswertungseinheit (30) aufweist, die dafür ausgebildet ist, die Fremdkörperkonzentration mit Hilfe einer von dem Lichtempfänger (22) aufgenommenen Streu- oder Transmissionslichtintensität zu bestimmen und wobei die Staubmessvorrichtung (10) eine Spüllufteinheit (32) mit einem Gebläse (36) aufweist, welche den Sensorkopf (14) mit Spülluft versorgen kann, um Verunreinigungen oder Ablagerungen zu vermeiden oder zu beseitigen,
**dadurch gekennzeichnet,**
**dass** der Sensorkopf als Sensormodul (14) und die Zentraleinheit als Zentralmodul (12) ausgebildet ist, indem die Auswertungseinheit (30) für die Auswertung und Ansteuerung von Sensormodulen (14) unterschiedlicher Messprinzipien ausgebildet ist,
**dass** die Zentraleinheit (12) die Spüllufteinheit (32) mit dem Gebläse (36) umfasst,
**dass** das Sensormodul (14) durch normierte Datenschnittstellen (26, 28) und Anschlüsse (38) für Spülluft austauschbar mit dem Zentralmodul (12) verbunden ist
und **dass** die Spüllufteinheit (32) eine Spülluftsteuerung (34) und die Anschlüsse (38) für Anschlussstücke unterschiedlichen Durchmessers aufweist und somit oder mit Ventilen oder Blenden sowie einer Einstellung der Leistungsaufnahme und damit der Drehzahl des Gebläses (36) durch die Spülluftsteuerung (34) in der Lage ist, für die Sensormodule (14) unterschiedlicher Messprinzipien Spülluft in der erforderlichen Menge und mit dem erforderlichen Wirkdruck verfügbar zu machen.

2. Staubmessvorrichtung (10) nach Anspruch 1,
wobei das Zentralmodul (12) und das Sensormodul (14) jeweils in einem separaten Gehäuse untergebracht sind.

3. Staubmessvorrichtung (10) nach Anspruch 1 oder 2,
wobei das Zentralmodul (12) einige oder alle folgenden Anschlüsse (44) aufweist: 0-20mA Stromaus- und -eingänge, Relais, Digitaleingänge, ProfiBUS, Ethernet, CAN, seriell, UMTS, GSM.

4. Staubmessvorrichtung (10) nach einem der vorhergehenden Ansprüche, wobei das Zentralmodul (12) eine Speichereinrichtung (42) aufweist, um die Eingangsdaten aller angeschlossenen Sensormodule (14) aufzuzeichnen und zur Auswertung über einen Anschluss auszugeben, wobei die Speichereinrichtung (42) insbesondere entnehmbar und in einen externen Computer einsetzbar oder dort anschließbar ist.

5. Staubmessvorrichtung (10) nach einem der vorhergehenden Ansprüche, wobei die Sensormodule (14) unterschiedlicher Messprinzipien einige oder alle der Folgenden umfassen: Transmissionsmesser, Rückwärtsstreumesser mit und ohne Lichtfalle, einteilige Vorwärtsstreulichtmesser mit lanzenförmigem Messkörper oder zweiteilige Vorwärtsstreulichtmesser.

6. Staubmessvorrichtung (10) nach einem der vorhergehenden Ansprüche, wobei die Sensormodule (14) in sich modular sind, um die Hinzufügung weiterer Messfunktionen oder Optionen zu ermöglichen.

7. Staubmessvorrichtung (10) nach einem der vorhergehenden Ansprüche, wobei die Sensormodule (14) untereinander und/oder gegenüber dem Zentralmodul (12) gleiche Hardware- und Softwarestrukturen aufweisen, insbesondere gleiche Prozessoren, Stromversorgungen, Schnittstellen, Resetschaltungen, Speicherfunktionen, Statusanzeigen und/oder Firmware.

8. Staubmessvorrichtung (10) nach einem der vorhergehenden Ansprüche, wobei eine einheitliche Bediensoftware vorgesehen ist, welche auf einem gemeinsamen Display (46) die Parametrierung der Sensormodule (14), der Spülluft und/oder die Anzeige von Messdaten ermöglicht.

9. Staubmessverfahren zur Bestimmung einer Fremdkörperkonzentration in einem Gas mittels mindestens eines optischen Sensorkopfes (14), welcher einen Lichtsender (16) und einen Lichtempfänger (22) aufweist, bei dem in einer Zentraleinheit (12) die Fremdkörperkonzentration mit Hilfe einer von dem Lichtempfänger (22) aufgenommenen Streu- oder Transmissionslichtintensität bestimmt wird, wobei der Sensorkopf (14) mit Spülluft versorgt wird, um Verunreinigungen oder Ablagerungen zu vermeiden oder zu beseitigen,
**dadurch gekennzeichnet,**
**dass** die Zentraleinheit den Sensorkopf (14) mit Spülluft versorgt und dass die Zentraleinheit als Zentralmodul (12) für die Auswertung und Ansteuerung von als Sensormodulen (14) ausgebildeten Sensorköpfen unterschiedlicher Messprinzipien ausgebildet ist, wobei Zentralmodul (12) und Sensormodul (14) durch normierte Datenschnittstellen (26, 28) und Anschlüsse (38) für Spülluft austauschbar miteinander verbunden werden und das Zentralmodul (12) dem Sensormodul (14) mittels Anschlüssen (38) für Anschlussstücke unterschiedlichen Durchmessers oder mit Ventilen oder Blenden sowie einer Einstellung der Leistungsaufnahme und damit der Drehzahl eines Gebläses (36) Spülluft in der erforderlichen Menge und mit dem erforderlichen Wirkdruck verfügbar macht.

## Claims

1. A modular dust measuring device (10) for the determination of a foreign body concentration in a gas having at least one optical sensor head (14), which has a light transmitter (16) and a light receiver (22), and having a central unit (12) which has an evaluation unit (30) configured to determine the foreign body concentration with the help of a scattered light intensity or transmitted light intensity recorded by the light receiver (22), and wherein dust measuring device (10) comprises a scavenging air unit (32) with a fan (36) to supply the sensor head (14) with scavenging air in order to avoid or eliminate impurities or deposits, **characterized in that**
the sensor head is configured as a sensor module (14) and the central unit is configured as central module (12) by the evaluation unit (30) being configured for the evaluation and control of sensor modules (14) of different measurement principles,
**in that** the central unit (12) comprises the scavenging air unit (32) with the fan (36);
**in that** the sensor module (14) is interchangeably connected to the central module (12) by standardized data interfaces (26, 28) and connections (38) for scavenging air;
and **in that** the scavenging air unit (32) comprises a scavenging air control (34) and the connections (38) for connectors of different diameter and, by that or by valves and apertures as well as a control of the power input and thus the rotation speed of the fan (36) by the scavenging air control (34), is able to make scavenging air available in the required quantity and with the required effective pressure for the sensor modules (14) of different measurement principles.

2. A dust measurement device (10) in accordance with claim 1,
wherein the central module (12) and the sensor module (14) are each accommodated in a separate housing.

3. A dust measurement device (10) in accordance with claim 1 or 2,
wherein the central module (12) has a plurality or all of these connections (44): 0-20 mA power inputs and outputs, relays, digital inputs, PROFIBUS, Ethernet, CAN, serial, UMTS, and GSM.

4. A dust measurement device (10) in accordance with any of the preceding claims,
wherein the central module (12) has a memory device (42) to record the input data of all connected sensor modules (14) and to output them via a connection for evaluation, with the memory device (42) in particular being removable and insertable into an external commuter or connectable there.

5. A dust measurement device (10) in accordance with any of the preceding claims,
wherein the sensor modules (14) of different measurement principles include a plurality or all of these: transmission measuring device, backscatter measuring device with and without light trap, one-part forward scattering light measuring device with lance-shaped measuring body and two-part forward scattered light measuring device.

6. A dust measurement device (10) in accordance with any of the preceding claims,
wherein the sensor modules (14) are modular per se to enable the addition of further measurement functions or options.

7. A dust measurement device (10) in accordance with any of the preceding claims,
wherein the sensor modules (14) have the same hardware structures and software structures among one another and/or with respect to the central module (12), in particular the same processors, power supplies, interfaces, reset circuits, memory functions, status displays and/or firmware.

8. A dust measurement device (10) in accordance with any of the preceding claims,
wherein uniform operating software is provided which enables the parameterization of the sensor modules (14), of the scavenging air and/or the display of measurement data on a common display (46).

9. A dust measurement method for the determination of a foreign body concentration in a gas by means of at least one optical sensor head (14) which has a light transmitter (16) and a light receiver (22), the method comprising: determining the foreign body concentration in a central unit (12) with the help of a scattered light intensity or transmitted light intensity recorded by the light receiver (22) and providing the sensor head (14) with scavenging air in order to avoid or eliminate impurities or deposits,
**characterized in that**
the central unit provides the scavenging air to the sensor head (14) and **in that** the central unit is configured as a central module (12) for the evaluation and control of sensor heads configured as sensor modules (14) of different measurement principles, with the central module (12) and the sensor module (14) interchangeably connected to one another by standardized data interfaces (26, 28) and connections (38) and the central module (12) providing the sensor module (14) with scavenging air in the required quantity and with the required effective pressure by means of connections (38) with connectors of different diameter or by valves or apertures as well as a control of the power input and thus the rotation speed of a fan (36).

## Revendications

1. Dispositif modulaire de mesure de poussière (10) pour la détermination d'une concentration en corps étrangers dans un gaz comprenant au moins une tête de capteur optique (14) qui comprend un émetteur de lumière (16) et un récepteur de lumière (22), et comprenant une unité centrale (12) qui comprend une unité d'évaluation (30) qui est réalisée pour déterminer la concentration en corps étrangers avec l'aide d'une intensité de lumière diffusée ou de lumière transmise encaissée par le récepteur de lumière (22), et dans lequel le dispositif de mesure de poussière (10) comprend une unité de rinçage d'air (32) avec un ventilateur (36) qui est capable d'alimenter la tête de capteur (14) avec de l'air de rinçage afin d'éviter ou d'éliminer des encrassements ou des dépôts,
**caractérisé en ce que**
la tête de capteur est réalisée sous forme de module de capteur (14) et l'unité centrale sous forme de module central (12), de sorte que l'unité d'évaluation (30) est réalisée pour l'évaluation et pour le pilotage de modules de capteurs (14) présentant des principes de mesures différents,
**en ce que** l'unité centrale (12) inclut l'unité de rinçage d'air (32) avec le ventilateur (3 6),
**en ce que** le module de capteur (14) est relié de manière interchangeable avec le module central (12) par des interfaces de données normalisées (26, 28) et par des raccords (38) pour l'air de rinçage, et
**en ce que** l'unité de rinçage d'air (32) comprend une commande d'air de rinçage (34) et les raccords (38) pour des pièces de raccordement de diamètres différents, et est en mesure, pour cette raison ou bien avec des vannes ou des diaphragmes ainsi qu'avec un réglage de la puissance absorbée et ainsi de la vitesse de rotation du ventilateur (36) par la commande de rinçage d'air (34), de mettre à disposition pour les modules de capteurs (14) présentant des principes de mesures différents, de l'air de rinçage dans la quantité nécessaire et avec la pression efficace nécessaire.

2. Dispositif de mesure de poussière (10) selon la revendication 1, dans lequel le module central (12) et le module de capteur (14) sont logés respectivement dans un boîtier séparé.

3. Dispositif de mesure de poussière (10) selon la revendication 1 ou 2, dans lequel le module central (12) comporte quelques-uns ou tous les raccords suivants (44) : arrivées et départs électriques à 0-20 mA, relais, entrées numériques, ProfiBUS, Ethernet, CAN, série, UMTS, GSM.

4. Dispositif de mesure de poussière (10) selon l'une des revendications précédentes, dans lequel le module central (12) comprend un système à mémoire (42) afin d'enregistrer les données d'entrée de tous les modules capteurs raccordés (14) et afin de les délivrer pour l'évaluation via une connexion, et le système à mémoire (42) est en particulier amovible et susceptible d'être mis en place dans un ordinateur externe ou d'être connecté à celui-ci.

5. Dispositif de mesure de poussière (10) selon l'une des revendications précédentes, dans lequel les modules de capteur (14) présentant des principes de mesures différents comprennent quelques-uns ou tous les suivants : capteur de mesure en transmission, capteur de mesure à rétrodiffusion avec ou sans piège de lumière, capteur de mesure de lumière en diffusion directe d'un seul tenant avec corps de mesure en forme de lance, ou capteur de mesure de lumière en diffusion directe en deux parties.

6. Dispositif de mesure de poussière (10) selon l'une des revendications précédentes, dans lequel les modules de capteurs (14) sont modulaires en eux-mêmes, afin de permettre l'addition d'autres fonctions de mesure ou d'autres options.

7. Dispositif de mesure de poussière (10) selon l'une des revendications précédentes,
dans lequel les modules de capteurs (14) comprennent entre eux et/ou par rapport au module central (12) les mêmes structures matérielles et logicielles, en particulier les mêmes processeurs, les mêmes alimentations électriques, les mêmes interfaces, les mêmes circuits de remise à zéro, les mêmes fonctions mémoire, les mêmes indications d'état et/ou micrologiciels (firmware).

8. Dispositif de mesure de poussière (10) selon l'une des revendications précédentes, dans lequel il est prévu un logiciel d'exploitation unitaire, qui permet le paramétrage des modules de capteurs (14), de l'air de rinçage et/ou l'affichage de données de mesure, sur un affichage commun (46).

9. Procédé de mesure de poussière pour la détermination d'une concentration en corps étrangers dans un gaz au moyen d'au moins une tête de capteur optique (14) qui comprend un émetteur de lumière (16) et un récepteur de lumière (22), dans lequel on détermine dans une unité centrale (12) la concentration en corps étrangers avec l'aide d'une intensité de la lumière diffusée ou de la lumière transmise encaissée par le récepteur de lumière (22), dans lequel la tête de capteur (14) est alimentée avec de l'air de rinçage afin d'éviter ou d'éliminer des encrassements ou des dépôts,
**caractérisé en ce que**
l'unité centrale alimente la tête de capteur (14) avec de l'air de rinçage, et **en ce que** l'unité centrale est réalisée sous forme de module central (12) pour l'évaluation et le pilotage des têtes de capteurs, réalisées comme des modules de capteurs (14), présentant des principes de mesures différents, de sorte que le module central (12) et le module de capteur (14) sont reliés l'un à l'autre de manière interchangeable par des interfaces de données normalisées (26, 28) et des raccords (38) pour l'air de rinçage, et le module central (12) met à disposition du module de capteur (14), au moyen de raccords (38) pour des pièces de raccordement de diamètres différents, au moyen de vannes ou de diaphragmes ainsi que d'un réglage de la puissance absorbée et ainsi de la vitesse de rotation d'un ventilateur (36), de l'air de rinçage dans la quantité nécessaire et avec la pression efficace nécessaire.
